# EUROPEAN PATENT SPECIFICATION

(11) **EP 1 119 659 B1**
(45) Date of publication and mention of the grant of the patent: **30.07.2003**
(21) Application number: 99949130.1
(22) Date of filing: 11.10.1999
(51) Int. Cl.: D06N 7/00, B29C 70/64

(54) **FLOOR COVERING MATERIAL AND METHOD FOR PRODUCING SAME**
BODENBESCHICHTUNGSMATERIAL UND VERFARHREN ZU DESSEN HERSTELLUNG
MATERIAU DE REVETEMENT POUR SOLS ET PROCEDE DE FABRICATION CORRESPONDANT

(30) Priority: 09.10.1998 GB 9822019
(43) Date of publication of application: 01.08.2001
(73) Proprietor: Polyflor Limited, Whitefield, Manchester M25 7NR (GB)
(72) Inventor: KAY, John, Granville, Manchester BL9 8BT (GB); MINETT, Michael, Geoffrey, Manchester M25 1LZ (GB); SEAGER, Grenville, Manchester M45 7EG (GB); ENTWISTLE, Adrian, Lance, Bacup, Lancashire OL12 9SD (GB); CROSBY, Craig, Lee, Stalybridge, Cheshire SK15 3DP (GB)
(74) Representative: Atkinson, Peter Birch
(86) International application number: GB9903169
(87) International publication number: WO00022225

(56) References cited:
- EP-A- 0 494 658
- US-A- 4 196 243
- US-A- 5 787 655

## Description

This invention relates to a material for use as a floor covering as well as a method for the production thereof.

Floor coverings based upon PVC are used extensively. Commonly they are produced by spreading a PVC plastisol onto a carrier substrate, often glass fibre, and then heat-curing the PVC. Such PVC floor coverings have the advantages of being inexpensive, easily coloured/patterned and combine longevity with ease of maintenance. However, a drawback of such floor coverings is that, although when dry they provide an adequate coefficient of friction (COF) to prevent users slipping, the COF can drop to dangerously low levels when the floor covering is wet, e.g. due to water carried by the feet of persons walking on the floor covering or because the floor covering is used in an environment where water may be spilt.

It is generally considered that a floor covering, when wet, should have a COF of at least 30 to prevent slipping. This value is usually achieved by one of the following methods.
a) An abrasive aggregate such as quartz, silicon carbide or corundum is incorporated into the wear surface during production of the floor covering. The aggregate provides a surface roughness which "breaks up" any water film thereon.
b) The texture of the floor covering is embossed to produce a high friction pattern.
c) A water absorbing filling agent such as cork is added as a filler during production.

Most manufacturers have concentrated on the first method ( i.e. (a)) to increase the COF. In this method the aggregate is embedded into the surface of the plastisol layer while it is still soft during manufacture of the floor covering . This ensures that the final floor covering has a roughened surface to provide the desired frictional properties. Furthermore, the aggregate can be used to give a decorative effect. For example, silicon carbide gives a shiny effect and quartz can be coloured.

However, when aggregates are used to increase the COF of PVC flooring there is a compromise between a higher COF and an increased maintenance effort. A floor covering with embedded aggregates tends to get dirty more quickly than an untreated floor covering as the aggregate removes dirt from footwear. Such dirt is difficult to remove from the surface of the flooring since it becomes embedded in the texture created by the aggregate. This effect is exacerbated by the nature of the plasticised PVC formulation which tends to have a high affinity for dirt and grease. Quite often a rigorous cleaning regime is required for thoroughly removing the dirt and grease and inadequate cleaning can give rise to hygiene problems.

A further problem with plasticised-PVC type floor coverings is that they can stain easily. Thus, for example, oils, fats and greases lead to yellow staining of PVC, which can therefore easily be discoloured when used in a kitchen. Certain cleaning agents also contain dyestuffs that are picked up by the PVC and this is a further source of discoloration. The staining of PVC is obviously undesirable from an aesthetic point of view.

A further problem is that fats (e.g. as may be split in a kitchen) can soften the PVC leading to increased slippiness, undermining the effect of the aggregate.

In the case of PVC floor coverings which do not include aggregates, it is known to incorporate a surface barrier coating which prevents stains. The surface coating reduces the floor covering's susceptibility to picking up stains and dirt. The coating typically lasts between 6-12 months and further lowers the frequency that the floor covering must be cleaned. However, such a coating cannot be applied over a PVC floor covering having aggregates embedded therein, as the coating covers the aggregate and reduces its efficacy.

It is therefore an object of the present invention to produce a floor covering that provides a sufficient COF, when wet, combined with ease of maintenance.

According to a first aspect of the present invention there is provided a floor covering material comprising a PVC layer and having aggregate embedded in the material for providing surface roughness wherein the material incorporates a barrier layer of polymeric material other than PVC fused into the upper surface of the PVC layer, the aggregate being embedded in the PVC layer whilst also being exposed at the surface of the barrier layer.

The floor covering material of the invention thus incorporates aggregate providing surface roughness and a barrier layer fused into the upper surface of the PVC layer. Since the barrier layer is fused into the upper surface of the PVC layer (and for this reason is other than PVC), the floor covering material comprises the PVC layer, the barrier layer and (between these two layers) a transition region which is comprised of both the PVC and the polymer of the barrier layer. Surface roughness is achieved by ensuring that a portion of the aggregate material is exposed at the surface of the barrier layer. Thus, for example, the aggregate may be proud of the barrier layer or may have an exposed surface at the level of the barrier layer surface. The barrier layer serves to protect the underlying PVC layer from discoloration and softening as described above. The material of the invention thus has the two-fold advantage of slip resistance (as provided by the surface aggregate) and protection of the PVC layer. Moreover the composition of the barrier layer may be chosen to impart at least one further desired characteristic for the floor covering material, e.g. enhanced stain resistance, dirt release and/or heat resistance. By this means, desirable surface properties for the PVC flooring (e.g. enhanced dirt release, stain resistance etc) can be achieved without adversely affecting slip performance as occurs with conventional coating processes.

Furthermore since the aggregate is embedded in the PVC layer then slip resistance is maintained even if the barrier layer becomes worn away. Additionally, even when the barrier layer proper is worn away, there is then exposed the aforementioned transition region which still provides a degree of barrier function.

Preferably the barrier layer is of a cured polymer material but we do not preclude the possibility of the barrier layer being thermoplastic.

Preferably the barrier layer is at least as flexible as the underlying PVC layer so as not to crack during normal use and handling of the product. Preferably also the barrier layer is transparent or translucent.

The barrier layer may for example comprise a polyolefin, (co-)polyester, (co-)polyamide, polyurethane, phenol formaldehyde, epoxy or acrylic polymer or a mixture of the polymers.

It is also preferred that the floor covering material has an embossed surface. Such embossing serves to help retain the aggregate material in the surface of the material.

The aggregate material may for example be quartz, corundum, and/or silicon carbide.

According to a second aspect of the present invention there is provided a method of producing a floor covering material comprising
(a) spreading a PVC plastisol on a substrate,
(b) distributing over the surface of the plastisol a powder of a film forming, heat fusible polymeric material other than PVC and a particulate aggregate material, said powder being distributed over the surface of the plastisol either before or simultaneously with the aggregate, and
(c) effecting heating to fuse the plastisol and convert the powder into a film,
steps (b) and (c) being effected such that aggregate is embedded in the PVC layer whilst also being exposed at the surface of the film.

According to a third aspect of the present invention there is provided a method of producing a floor covering material comprising
(a) spreading a PVC plastisol on a substrate,
(b) distributing over the surface of the plastisol a powder of a film forming, heat fusible polymeric material other than PVC and a particulate aggregate material, said aggregate being distributed over the surface of the plastisol prior to the powder and excess powder being removed from the plastisol prior to step (c), and
(c) effecting heating to fuse the plastisol and convert the powder into a film,
steps (b) and (c) being effected such that aggregate is embedded in the PVC layer whilst also being exposed at the surface of the film.

The method of either the second or third aspect of the invention may be effected semi-continously by withdrawing a web of the substrate material from a roll thereof and moving the travelling web successively through the steps of the method identified above.

In step (a) of the method of either the second or third aspect of the invention, the substrate is for preference glass fibre although other materials may be used. The PVC plastisol may be spread onto the substrate using a knife-over-roller coating process. Typically the plastisol is applied to the substrate to a thickness of 1.5 to 3.5mm.

The powdered polymeric material used in step (b) of the method of either the second or third aspect of the invention may be a thermoplastic but is more preferably a material which becomes cured at a subsequent stage in the process. Thus, the polymeric material may be heat curable and become cured in step (c) of the process or may be a radiation (e.g. UV) curable system which is subjected to cross-linking in a step subsequent to (c).

The powder employed in step (b) should be one which is compatible with the PVC plastisol so that the polymer is converted to a film which bonds to the PVC layer in the floor covering. The film of the polymer should have a similar co-efficient of thermal expansion to the PVC layer. Given that the PVC layer is flexible then the film should be at least as flexible so as not to crack during normal use and handling of the product.

In step (b) of the method of the second aspect of the invention, the powder may be distributed over the plastisol either before or simultaneously with the aggregate. If the powder is distributed before the aggregate then the powder on the plastisol may be softened (e.g. using a medium wave infra-red heater) to a semi-molten state to allow more ready acceptance of the aggregate onto the surface. If the powder and aggregate are distributed onto the plastisol simultaneously then softening of the powder may once again be effected prior to step (c). Alternatively in accordance with the method of the third aspect of the invention, as indicated, the aggregate may be distributed over the plastisol prior to the powder. Excess powder (e.g. that which is covering the aggregate or which has not otherwise become absorbed in the plastisol) may be removed prior to step (c). Such removal may for example be effected by suction, (using a vacuum) or blowing such as by using an air knife.

Typically the amount of powder applied is 10 to 100 gm⁻², more preferably 30-70 gm⁻². The powder preferably has a particle size below 200 microns, more preferably below 100 microns. It is particularly preferred that the mean particle size is in the range 40-60 microns. Further details of powders which may be used are given below.

A wide variety of particulate aggregate materials may be used. Suitable examples include quartz, silicon carbide or corundum as conventionally used for providing surface roughness in floor coverings. The particle size of the aggregate is preferably in the range 0.5 to 1.00mm and is incorporated into the surface at a density of 50 to 200g m⁻².

In step (c), the heating may be effected in a drying oven using a temperature of 190-200°C. This will fuse the plastisol and melt the powder polymeric material to form a uniform film on the plastisol surface. If the powder is thermally cross-linkable then the cross-linking step (c) will be effected whilst the material is in the oven. If the powder is of a uv cross-linkable polymeric system then cross-linking may be effected in a subsequent step using uv lamps.

It is particularly preferred that pressure is applied to the surface of the material (e.g. by an embossing operation) after the heating operation (step (c)) but whilst the plastisol is still soft to produce a textured surface. This pressure application step assists in retention of the aggregate in the surface.

The powdered polymeric material used in step (b) may be a thermoplastic (thermofusable) material. Thermofusable materials flow to form a molten film on the plastisol and solidify on cooling. Examples of thermofusable materials which may be used include:
i) polyester co-polymers (e.g. having a DSC melting range of 90-120°C, and a Melt Flow Index (MFI) of 15-40g/10 min under an applied load of 2.16 kg);
ii) co-polyamides (e.g. having a DSC melting range of 80-130°C, and an MFI of 15-95g/10 min under an applied load of 2.16 kg); and
iii) polyolefins (e.g. having a DSC melting range 100-135°^{C}, and an MFI of 10-95 g/10 min under an applied load of 2.16 kg).

Examples of polyolefins which may be used include polyethylenes and ethylene-propylene copolymers.

Thermofusable polymeric coatings (e.g. of the type defined under (i)-(iii) above) give improved soiling, chemical and staining resistance with no adverse effects on the slip resistance of the floor covering. The thermofusable polymers can either be used alone or blended to suit specific requirements.

It is however more preferred to use, as the polymeric material for step (b), a curable resin system. Such a resin system may be a thermosetting resin or a uv curable resin.

Thermosettable materials flow into a molten film on the plastisol substrate and are cross-linked by a heat activated cross-linking mechanism. Examples of thermosettable polymeric systems which may be used in the method of the invention include:
a) epoxy resins, e.g. phenol formaldehyde resins and epichlorhydrin cured with aminic curing agents known in the art, such as benzyldimethylamine and dicyanamide;
b) polyesters with hydroxyl or carboxyl end groups, cured with blocked isocyanates, e.g. caprolactam-isocyanate products;
c) polyurethanes cured with blocked isocyanates; and
d) acrylics incorporating epoxy resins and polyesters to allow curing with blocked isocyanates.

Thermosettable polymeric materials give the same benefits as those of thermofusible polymeric coatings but with the additional advantage of enhanced durability and staining resistance. The polymers can either be used alone or blended to suit specific requirements.

UV curable polymeric materials flow to form a molten film on the plastisol during step (c) and may cross-linked by the action of uv light subsequent to step (c). The following compounds may for example, be used as UV curable coatings on the floor covering:
a) UV curable polyesters e.g. unsaturated polyesters, cross-linked by free radical initiated polymerisation using curing agents known in the art, e.g. diacetonacrylamide; and
b) Bifunctional epoxy resins, cross-linked by cationic photoinitiated polymerisation using photoinitiators known in the art e.g. ferrocenium salts.

UV curable polymeric materials demonstrate similar benefits to those of thermoset polymeric coatings but with additional processing advantages in that the cross-linking reaction can be controlled separately from the plastisol fusion process. The polymers can either be used alone or blended to suit specific requirements.

For UV curable systems employed in the invention, there may be some thermal cross-linking in step (c) and depending on the resin used the UV-curing step may also need to be effected at elevated temperature.

For all embodiments of the method of the invention, it is possible for the powder (which forms the barrier layer) to include at least one of a flow modifying agent, a flame retardant agent, a biocide, a gloss modifier, a matting agent or other coating technology additive well known in the art.

In a typical embodiment of the method of the invention, a floor covering material is formed by the following steps.
(i) PVC plastisol is spread onto a substrate web (e.g. glass fibre) drawn from a roll thereof using a knife-over-roller coating process.
(ii) Powder (for forming the barrier layer) and aggregate are distributed over the plastisol either simultaneously or in any order. If the powder is applied first, then it may softened, (e.g. using a MWIR) prior to application of the aggregate. If the aggregate is applied prior to the powder then excess powder (i.e. that which is non-absorbed in, or not adhered to, the plastisol) may be removed, e.g. by using suction or by blowing-off with an air knife prior to step (iii) below.
(iii) The web material resulting from (ii) is then passed through an oven to fuse the plastisol and convert the powder to a film. If the powder is of a thermally curable resin then cross-linking will be effected in the oven. If however the powder is of a uv-curable resin then there would be a subsequent uv-curing stage.
(iv) Optionally the web may be embossed. In the case where there is a uv-curing stage, embossing preferably takes place before uv-curing but can take place after.
(v) The thus formed web material may then be passed through curing and accumulator stages as conventional in the manufacture of PVC flooring.

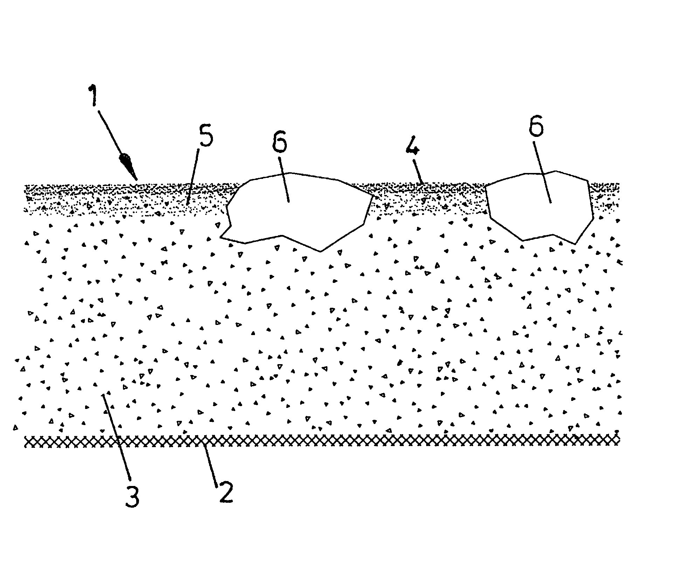

The invention will be further described by way of example only with reference to Fig 1 of the accompanying drawings which illustrates one embodiment of floor covering in accordance with the invention.

As shown in the drawing, a floor-covering 1 in accordance with the invention, comprises a backing layer 2 (e.g. of glass fibre), a PVC layer 3 (as represented by the small triangles) an upper barrier layer 4 (produced form the powdered material discussed above) and a transition region 5 formed between layers 3 and 4. This transition region 5 is, in effect, where the barrier layer 4 is fused to the PVC layer 3 and incorporates both the material of the barrier layer and PVC. Also included in the floor covering 1 are particles of aggregate 6 (e.g. silicone carbide) which are embedded in the PVC layer and which are exposed at the barrier layer.

The method of the invention may be effected semi-continuously by withdrawing a web of the substrate material from a roll thereof and moving the travelling web successively through the steps of the method identified above.

## Claims

1. A floor covering material comprising a PVC layer and having aggregate embedded in the material for providing surface roughness wherein the material incorporates a barrier layer of polymeric material other than PVC fused into the upper surface of the PVC layer, the aggregate being embedded in the PVC layer whilst also being exposed at the surface of the barrier layer.

2. A material as claimed in claim 1 wherein the barrier layer is of a cured polymeric material.

3. A material as claimed in claim 1 wherein the barrier layer is of a thermoplastic material.

4. A material as claimed in any one of claims 1 to 3 wherein the barrier layer is at least as flexible as the underlying PVC layer.

5. A material as claimed in any one of claims 1 to 4 wherein the barrier layer is transparent or translucent.

6. A material as claimed in any one of claims 1 to 5 wherein the polymeric material of the barrier layer provides enhanced dirt release and/or stain resistance in comparison to the PVC.

7. A material as claimed in any one of claims 1 to 6 wherein the barrier layer comprises a polyolefin, (co-)polyester, (co-)polyamide, polyurethane, phenol formaldehyde, epoxy or acrylic polymer or a mixture thereof.

8. A material as claimed in any one of claims 1 to 7 wherein the floor covering material has an embossed surface.

9. A material as claimed in any one of claims 1 to 8 wherein the aggregate is quartz, corundum, and/or silicon carbide.

10. A method of producing a floor covering material comprising
(a) spreading a PVC plastisol on a substrate,
(b) distributing over the surface of the plastisol a powder of a film forming, heat fusible polymeric material other than PVC and a particulate aggregate material, said powder being distributed over the surface of the plastisol either before or simultaneously with the aggregate, and
(c) effecting heating to fuse the plastisol and convert the powder into a film,
steps (b) and (c) being effected such that aggregate is embedded in the PVC layer whilst also being exposed at the surface of the film.

11. A method as claimed in claim 10 wherein the powder is distributed over the plastisol prior to the aggregate material.

12. A method as claimed in claim 11 wherein the powder applied to the plastisol is softened prior to distribution of the aggregate.

13. A method as claimed in claim 10 wherein the powder is distributed over the plastisol simultaneously with the aggregate.

14. A method of producing a floor covering material comprising
(a) spreading a PVC plastisol on a substrate,
(b) distributing over the surface of the plastisol a powder of a film forming, heat fusible polymeric material other than PVC and a particulate aggregate material, said aggregate being distributed over the surface of the plastisol prior to the powder and excess powder being removed from the plastisol prior to step (c), and
(c) effecting heating to fuse the plastisol and convert the powder into a film,
steps (b) and (c) being effected such that aggregate is embedded in the PVC layer whilst also being exposed at the surface of the film.

15. A method as claimed in claim 14 wherein the excess powder is removed by suction.

16. A method as claimed in any one of claims 10 to 15 wherein the powder is a thermoplastic material.

17. A method as claimed in any one of claims 10 to 15 wherein the powder is of a curable resin system.

18. A method as claimed in claim 17 wherein said resin system is cured by heat and curing is effected in step (c).

19. A method as claimed in claim 17 wherein the resin system is curable by UV-radiation.

20. A method as claimed in claim 19 wherein UV curing is effected subsequent to step (c).

21. A method as claimed in any one of claims 10 to 20 wherein the powder comprises a polyolefin, (co-)polyester, (co-)polyamide, polyurethane, phenol formaldehyde, epoxy or acrylic polymer or a mixture thereof.

22. A method as claimed in any one of claims 10 to 21 wherein embossing is applied subsequent to step (c).

23. A method as claimed in any one of claims 10 to 22 wherein the aggregate is quartz, corundum and/or silicon carbide.

24. A method as claimed in any one of claims 10 to 23 wherein the powder incorporates at least one of a flow modifying agent, a flame retardant, a biocide, a gloss modifier and a matting agent.

## Patentansprüche

1. Bodenbeschichtungsmaterial, das eine PVC-Schicht aufweist, und das einen im Material eingebetteten Zuschlagstoff für das Bewirken einer Oberflächenrauheit aufweist, worin das Material eine Sperrschicht aus polymerem Material anders als PVC enthält, die in die obere Fläche der PVC-Schicht eingeschmolzen wird, wobei der Zuschlagstoff in der PVC-Schicht eingebettet wird, während er ebenfalls auf der Oberfläche der Sperrschicht freigelegt wird.

2. Material nach Anspruch 1, bei dem die Sperrschicht aus einem ausgehärteten polymeren Material besteht.

3. Material nach Anspruch 1, bei dem die Sperrschicht aus einem thermoplastischen Material besteht.

4. Material nach einem der Ansprüche 1 bis 3, bei dem die Sperrschicht mindestens so elastisch ist wie die darunterliegende PVC-Schicht.

5. Material nach einem der Ansprüche 1 bis 4, bei dem die Sperrschicht durchlässig oder durchsichtig ist.

6. Material nach einem der Ansprüche 1 bis 5, bei dem das polymere Material der Sperrschicht eine verstärkte Schmutzfreigabe und/oder Fleckenbeständigkeit im Vergleich zum PVC bewirkt.

7. Material nach einem der Ansprüche 1 bis 6, bei dem die Sperrschicht aufweist: ein Polyolefin; einen (Co)polyester; ein (Co)polyamid; ein Polyurethan; ein Phenolformaldehyd; ein Epoxid- oder Acrylpolymer; oder eine Mischung davon.

8. Material nach einem der Ansprüche 1 bis 7, bei dem das Bodenbeschichtungsmaterial eine geprägte Oberfläche aufweist.

9. Material nach einem der Ansprüche 1 bis 8, bei dem der Zuschlagstoff Quarz, Korund und/oder Siliciumcarbid ist.

10. Verfahren zur Herstellung eines Bodenbeschichtungsmaterials, das die folgenden Schritte aufweist:
(a) Auftragen eines PVC-Plastisols auf ein Trägermaterial;
(b) Verteilen eines Pulvers eines folienbildenden, wärmeschmelzbaren, polymeren Materials anders als PVC und eines teilchenförmigen Zuschlagstoffes über der Oberfläche des Plastisols, wobei das Pulver über der Oberfläche des Plastisols entweder vor oder gleichzeitig mit dem Zuschlagstoff verteilt; und
(c) Bewirken einer Erwärmung, um das Plastisol zu schmelzen und das Pulver in eine Folie umzuwandeln,
wobei die Schritte (b) und (c) so bewirkt werden, daß der Zuschlagstoff in der PVC-Schicht eingebettet wird, während er ebenfalls an der Oberfläche der Folie freigelegt wird.

11. Verfahren nach Anspruch 10, bei dem das Pulver über dem Plastisol vor dem Zuschlagstoff verteilt wird.

12. Verfahren nach Anspruch 11, bei dem das auf das Plastisol aufgebrachte Pulver vor der Verteilung des Zuschlagstoffes erweicht wird.

13. Verfahren nach Anspruch 10, bei dem das Pulver über dem Plastisol gleichzeitig mit dem Zugschlagstoff verteilt wird.

14. Verfahren zur Herstellung eines Bodenbeschichtungsmaterials, das die folgenden Schritte aufweist:
(a) Auftragen eines PVC-Plastisols auf ein Trägermaterial;
(b) Verteilen eines Pulvers eines folienbildenden, wärmeschmelzbaren, polymeren Materials anders als PVC und eines teilchenförmigen Zuschlagstoffes über der Oberfläche des Plastisols, wobei der Zuschlagstoff über der Oberfläche des Plastisols vor dem Pulver verteilt wird, und wobei das überschüssige Pulver vom Plastisol vor dem Schritt (c) entfernt wird; und
(c) Bewirken einer Erwärmung, um das Plastisol zu schmelzen und das Pulver in eine Folie umzuwandeln,
wobei die Schritte (b) und (c) so bewirkt werden, daß der Zuschlagstoff in der PVC-Schicht eingebettet wird, während er ebenfalls an der Oberfläche der Folie freigelegt wird.

15. Verfahren nach Anspruch 14, bei dem das überschüssige Pulver durch Saugen entfernt wird.

16. Verfahren nach einem der Ansprüche 10 bis 15, bei dem das Pulver ein thermoplastisches Material ist.

17. Verfahren nach einem der Ansprüche 10 bis 15, bei dem das Pulver aus einem härtbaren Harzsystem besteht.

18. Verfahren nach Anspruch 17, bei dem das Harzsystem durch Wärme ausgehärtet wird und das Aushärten beim Schritt (c) bewirkt wird.

19. Verfahren nach Anspruch 17, bei dem das Harzsystem durch UV-Strahlung härtbar ist.

20. Verfahren nach Anspruch 19, bei dem das UV-Aushärten nach dem Schritt (c) bewirkt wird.

21. Verfahren nach einem der Ansprüche 10 bis 20, bei dem das Pulver aufweist: ein Polyolefin; einen (Co)polyester; ein (Co)polyamid; ein Polyurethan; ein Phenolformaldehyd; ein Epoxid- oder Acrylpolymer; oder eine Mischung davon.

22. Verfahren nach einem der Ansprüche 10 bis 21, bei dem das Prägen nach dem Schritt (c) angewandt wird.

23. Verfahren nach einem der Ansprüche 10 bis 22, bei dem der Zuschlagstoff Quarz, Korund und/oder Siliciumcarbid ist.

24. Verfahren nach einem der Ansprüche 10 bis 23, bei dem das Pulver mindestens eines der folgenden enthält: ein Fließmodifizierungsmittel; ein Flammenhemmungsmittel; ein Biozid; ein Glanzmodifizierungsmittel; und ein Mattierungsmittel.

## Revendications

1. Matériau de revêtement de sol comprenant une couche de PVC et comportant un agrégat noyé dans le matériau pour établir une rugosité de surface, le matériau incorporant une couche de barrière de matériau polymère autre que le PVC fondu dans la surface supérieure de la couche de PVC, l'agrégat étant noyé dans la couche de PVC tout en étant exposé au niveau de la surface de la couche de barrière.

2. Matériau selon la revendication 1 dans lequel la couche de barrière est composée de matériau polymère durci.

3. Matériau selon la revendication 1, dans lequel la couche de barrière est composée d'un matériau thermoplastique.

4. Matériau selon l'une quelconque des revendications 1 à 3, dans lequel la couche de barrière est au moins aussi flexible que la couche de PVC sous-jacente.

5. Matériau selon l'une quelconque des revendications 1 à 4, dans lequel la couche de barrière est transparente ou translucide.

6. Matériau selon l'une quelconque des revendications 1 à 5, dans lequel le matériau polymère de la couche de barrière assure un dégagement des saletés et/ou présente une résistance aux taches améliorés par rapport au PVC.

7. Matériau selon l'une quelconque des revendications 1 à 6, dans lequel la couche de barrière comprend une polyoléfine, un (co-)polyester, un (co-)polyamide, un polyuréthane, du phénol-formaldéhyde, de l'époxyde ou un polymère acrylique ou un mélange correspondant.

8. Matériau selon l'une quelconque des revendications 1 à 7, dans lequel le matériau de revêtement du sol comporte une surface gaufrée.

9. Matériau selon l'une quelconque des revendications 1 à 8, dans lequel l'agrégat est constitué par du quartz, du corindon, et/ou de carbure de silicium.

10. Procédé de production d'un matériau de revêtement du sol, comprenant les étapes ci-dessous:
(a) étalement d'un plastisol de PVC sur un substrat;
(b) distribution au-dessus de la surface de plastisol d'une poudre d'un matériau polymère à formation de film, à fusion à chaud, autre que le PVC, et d'un matériau d'agrégat particulaire, ladite poudre étant distribuée au-dessus de la surface du plastisol avant l'agrégat ou simultanément à celui-ci, et
(c) chauffage pour faire fondre le plastisol et convertir la poudre en un film,
les étapes (b) et (c) étant effectuées de sorte que l'agrégat est noyé dans la couche de PVC tout en étant exposé au niveau de la surface du film.

11. Procédé selon la revendication 10, dans lequel la poudre est distribuée au-dessus du plastisol avant le matériau d'agrégat.

12. Procédé selon la revendication 11, dans lequel la poudre appliquée sur le plastisol est ramollie avant la distribution de l'agrégat.

13. Procédé selon la revendication 10, dans lequel la poudre est distribuée au-dessus du plastisol simultanément à l'agrégat.

14. Procédé de production d'un matériau de revêtement du sol, comprenant les étapes ci-dessous:
(a) étalement d'un plastisol de PVC sur un substrat,
(b) distribution au-dessus de la surface du plastisol d'une poudre d'un matériau polymère à formation de film et à fusion à chaud autre que le PVC et d'un matériau d'agrégat particulaire, ledit agrégat étant distribué au-dessus de la surface du plastisol avant la poudre, la poudre excédentaire étant éliminée du plastisol avant l'étape (c), et
(c) chauffage pour faire fondre le plastisol et convertir la poudre en un film,
les étapes (b) et (c) étant effectuées de sorte que l'agrégat est noyé dans la couche de PVC, tout en étant exposé au niveau de la surface du film.

15. Procédé selon la revendication 14, dans lequel la poudre excédentaire est éliminée par aspiration.

16. Procédé selon l'une quelconque des revendications 10 à 15, dans lequel la poudre est constituée par un matériau thermoplastique.

17. Procédé selon l'une quelconque des revendications 10 à 15, dans lequel la poudre est constituée par un système de résine durcissable.

18. Procédé selon la revendication 17, dans lequel ledit système de résine est durci par la chaleur, le durcissement étant effectué lors de l'étape (c).

19. Procédé selon la revendication 17, dans lequel le système de résine est durcissable par rayonnement UV.

20. Procédé selon la revendication 19, dans lequel le durcissement aux UV est réalisé après l'étape (c).

21. Procédé selon l'une quelconque des revendications 10 à 20, dans lequel la poudre comprend une polyoléfine, un (co-)polyester, un (co-)polyamide, un polyuréthane, du phénol-formaldéhyde, de l'époxyde ou un polymère acrylique ou un mélange correspondant.

22. Procédé selon l'une quelconque des revendications 10 à 21, dans lequel le gaufrage est effectué après l'étape (c).

23. Procédé selon l'une quelconque des revendications 10 à 22, dans lequel l'agrégat est constitué par du quartz, du corindon et /ou du carbure de silicium.

24. Procédé selon l'une quelconque des revendications 10 à 23, dans lequel la poudre incorpore au moins un des agents suivants, un agent de modification de l'écoulement, un agent ignifugeant, un biocide, un modificateur du brillant et un agent de matage.
